(19) **Europäisches Patentamt / European Patent Office / Office européen des brevets**

(11) **EP 1 953 536 A1**

(12) # EUROPEAN PATENT APPLICATION

(43) Date of publication:
06.08.2008 Bulletin 2008/32

(51) Int Cl.:
*G01N 21/77* (2006.01)     *G01N 21/81* (2006.01)
*G01L 11/02* (2006.01)     *G01K 11/32* (2006.01)

(21) Application number: 07101513.5

(22) Date of filing: 31.01.2007

(84) Designated Contracting States:
AT BE BG CH CY CZ DE DK EE ES FI FR GB GR HU IE IS IT LI LT LU LV MC NL PL PT RO SE SI SK TR
Designated Extension States:
AL BA HR MK RS

(71) Applicant: Agilent Technologies, Inc.
Santa Clara, CA 95051 (US)

(72) Inventor: **Thoma, Peter**
**72108, Rottenburg (DE)**

(74) Representative: **Barth, Daniel Mathias et al**
**Agilent Technologies Deutschland GmbH**
**Patentabteilung**
**Herrenberger Strasse 130**
**71034 Böblingen (DE)**

(54) **Distributed physical property sensing using a fiber performing an enhanced raman scattering**

(57) The present invention relates to determining a distributed physical property along a line, comprising an optical fiber (3) positioned along the line, and an acquisition system (1) coupled to the optical fiber (3) for analyzing backscattering light being returning from the optical fiber (3) in response to a probe signal (S) launched into the optical fiber (3), whereby at least a section of the optical fiber (3) comprises microstructures with a characteristic lengths equal or smaller than the wavelength of the probe signal (S), in order to provide a high backscattering coefficient of selected wavelengths different from the wavelength of the probe signal (S).

Fig.1

**Description**

BACKGROUND ART

The present invention relates to distributed fiber sensing.

For measuring a distributed physical property such as a temperature or a pressure along a certain line, it is known to provide such line with an optical fiber connected to a laser source. The laser source provides a probe signal to the fiber which starts to travel along the optical fiber and which is partly scattered due to tiny inhomogeneities in the optical fiber, e.g. due to inhomogeneities in the silica structure along the optical fiber. The scattered light traveling back has different spectral components. The power over time or distance of these components is determined and set into relation with each other in order to obtain a distributed physical property along the fiber. A corresponding arrangement for measuring a temperature distribution along an optical fiber is e.g. described in US 5,618,108.

One of the key limitations of such distributed physical property measurements is the long acquisition time. Depending on the total optical loss, the length of the fiber and the required property resolution, the acquisition time range might extend to minutes or even to hours. The main cause for long acquisition times is that spectral components backscattering at a different wavelength (so-called Raman backscatter) with respect to the probe signal wavelength have low intensity compared to various optical noise sources, such as thermal receiver noise or so-called shot noise, e.g. about 20-30 dB below the component backscattering at the same wavelength (so-called Rayleigh backscatter) with respect to probe signal wavelength.

Surface-enhanced Raman scattering is well known in the art. Surface enhanced scattering is used in microscopy e.g. for analyzing molecular structures. Thereto, the article "Nanostructured optical fiber with surface-enhanced Raman scattering functionality"; OPTICS LETTERS, Vol.30, No 6, March 15, 2005 of Daniel J. White and Paul R. Stoddart, describes a surface-enhanced Raman scattering (SERS) being attributed to electromagnetic and chemical interactions between a surface with nanoscale metal structures and a target molecule absorbed onto or in close proximity to the surface. SERS active surfaces can be generated e.g. by electron-beam or nanosphere lithography, porous silicon, vapor-deposited deposited metal.

Similarly, the documents "Surface-enhanced Raman scattering", Chemical Society Reviews, 1998, volume 27 of Alain Campion and Patanjali Kambhampati, "Applications of Enhanced Raman Spectroscopy in Biological Sciences of Li-Lin Tay to be drawn from the web address http://www.canadiansemiconductor.org/presentations/lilin tay.pdf, and "Advanced Raman Gain for Next Generation Networks" of George Stegeman et. al. to be drawn from the web address http://oclab.usc.edu/nsf/oct2002/pdf/stegeman-raman-gain.pdf refer to surface-enhanced Raman scattering.

DISCLOSURE OF THE INVENTION

It is an object of the invention to provide an improved distributed fiber sensing solution. The object is solved by the independent claims. Further embodiments are shown by the dependent claims.

An idea of the invention is to provide a fiber that has an enhanced Raman scattering coefficient compared to optical fibers, e.g. single mode or multi mode optical fibers, used in present optical communication systems as standardized by the ITU, in the following also being referred to as standard or standardized fibers.

According to embodiments of the invention, an enhanced Raman scattering fiber, in the following also being referred to as ERS fiber is used in combination with a fiber based distributed physical property acquisition system. Thereto, an optical reflectometry arrangement is provided for determining a distributed physical property along a given line (e.g. a straight line or a line having straight sections and/or one or a plurality of bendings or having any other form). The reflectometry arrangement comprises an ERS fiber being optically coupled to an acquisition system for detecting and evaluating spectral components of a response light returning from the ERS fiber in response to a probe light being launched into the fiber.

In contrast to surface enhanced optical fibers as discussed above, the backscattering signals returning from the ERS fiber are not (only) enhanced at a certain surface, but along a light path within the optical fiber. In other words, the ERS fiber shows a three-dimensional effect of the enhancing mechanism.

Differently to known approaches with standardized fibers as mentioned above, ERS fibers produce significantly stronger Raman response signals and therefore result in significantly better SNR. The improved SNR yields to benefits in measurement time and/or distance and temperature resolution. A typical value for the intensity enhancement might be in the range between 10 and 30 dB compared to standardized fibers. As the ERS coefficient of the ERS fiber and the fiber loss (e.g. due to absorption) coefficient shows a certain dependency to each other, the ERS coefficient is preferably chosen such that the fiber loss over the whole length is below a certain value.

The invention thus enables new applications for process controlling especially where short measurement time and therewith short reaction time is critical. Further, applications are enabled with long measurement lengths.

In a further embodiment, only a fraction of the optical fiber connected to the acquisition systems has ERS characteristics. This allows providing a remote measurement section in series to a non ERS feeder fiber that might be a standardized fiber. As ERS fibers are assumed to be more expensive compared to non ERS fibers, such approach might be highly cost efficient.

In a further embodiment, the ERS fiber is realized by providing microstructures within the guiding light path of the ERS fiber with a characteristic length equal or smaller than the wavelength of the probe signal.

In a further embodiment, the microstructures are realized by providing nanoparticles into the guiding light path of the fiber, whereby the nanoparticles have a characteristic length equal or smaller than the wavelength of the probe signal, that increase the local electromagnetic field. The density and/or dimensions of the nanoparticles within the fiber core might be chosen to meet a certain trade-off between ERS and fiber loss. The nanoparticles might be distributed equally over the fiber core cross section or might have any other distribution, e.g. a normal distribution or a step distribution.

In a further embodiment, at least two space dimensions of the nanoparticles are equal or smaller than the wavelength of the probe signal. In an embodiment, the two dimensions being smaller than the wavelength of the probe signal are oriented perpendicular with respect to the propagation direction of the probe signal.

In an alternative embodiment, the microstructures are realized by optical material variations provided to the fiber core.

In a further embodiment, such variations are realized by providing a corresponding doping structure with a characteristic length equal or smaller than the wavelength of the probe signal by doping an optical core material, whereby the dopants are metal atoms or molecules e.g. of gold, silver, or of the rare earth elements.

In a further alternative embodiment, the microstructures are realized by composite optical materials, e.g. being realized using polymer material, thereby providing an appropriate optical index structure.

The materials being selected for the nanoparticles or as dopants are chosen to comply with a corresponding fiber manufacturing process, thereby showing a sufficient stability.

In an embodiment, an optical filter arrangement is arranged to receive the response light and separate each a first spectral part around a first wavelength, in the following also being referred to as a first response signal, and a second spectral part around a second wavelength, in the following also being referred to as second response signal. The acquisition system comprises a detector for detecting each a power (or intensity) over time of the first and second response signal. Further, an analyzing circuit is provided for evaluating the power functions and deriving the physical property by setting the functions into relation to each other.

In an embodiment, the optical filter arrangement comprises a switchable filter arranged for receiving the response light and selecting the first spectral component at a first switching position and the second spectral component at a second switching position. In order to alternately pass the first optical component and the second optical component to the detector, the switchable filter is preferably arranged to be movable. Alternatively, the optical filter arrangement comprises a movable shutter for alternatively blocking one of the separated spectral components from the detector.

In a further embodiment, the probe light is a narrow band signal at a certain probe wavelength, the response light returning from the optical fiber comprises a Rayleigh signal at the same wavelength as the probe light, an Anti stokes signal around a first response wavelength $\lambda_1$ at a lower wavelength and a Stokes signal around a second response wavelength $\lambda_2$, at a higher wavelength with regard to the Rayleigh wavelength. The distributed physical property thereby corresponds to a temperature profile along at least a part of the optical fiber.

The output signals of the optical detector are power functions representing the optical powers of the first and second response signals R1 and R2 over the time. In order to obtain function of the location of the optical fiber, a time-to-location conversion might be performed based on a group velocity at the wavelength of the probe signal.

The chromatic dispersion of an optical material of the optical fiber leads to differences in the speed of light of different wavelengths of signals traveling through the optical fiber. If the first response signal and the second response have different wavelengths, both signals will have different group velocities. Therefore, in a further embodiment, the different group velocities of the different wavelengths are taken into account. Therefore, a first time-to-location conversion of the first power signal over time is derived by converting the dependency over time to a dependency over location by means of the group velocity at the first wavelength, and conversion of the second power signal over time is derived by converting the dependency over time to a dependency over location by means of the group velocity at the second wavelength.

In a further embodiment, the processing unit is adapted to control the light source such that the light source generates a certain sequence of pulses, also being referred to as digital pattern. Thereby, the first and second response signals each represents a superposition of time shifted power responses of a plurality of single pulses. For obtaining the impulse responses of a single pulse, the analyzer performs a convolution of the first power response and the second signal each with said pattern.

The digital pattern might be a so-called pseudo noise sequence, a set of so-called Golay codes or any sequence of which the autocorrelation function shows side lobes being significantly lower compared to main pulse. In order to determine the resulting power responses, the analyzer performs a convolution of the power of the probe signal with each both the power responses. This convolution might be performed by a digital convolution of the digital sequence and the sequence of sampled power values.

The advantage of such correlation methods is that the optical fiber responses comprise significantly more energy (depending on the number of pulses of the pulse sequence) compared to responses of a single pulse without reducing the spatial resolution. This allows for further reducing the measurement time or enhancing the measurement resolution.

In a further embodiment, a control unit is provided to control at least one of the light source emitting the probe signal, the optical selector, the optical detector and the analyzer, so that the emission of pulses of the light source, the selection of response signals by the optical selector, the power detection of the optical selector and the signal processing within the analyzing unit are coordinated.

Embodiments of the invention can be partly or entirely embodied or supported by one or more suitable software programs, which can be stored on or otherwise provided by any kind of data carrier, and which might be executed in or by any suitable data processing unit.

BRIEF DESCRIPTION OF DRAWINGS

Other objects and many of the attendant advantages of embodiments of the present invention will be readily appreciated and become better understood by reference to the following more detailed description of preferred embodiments in connection with the accompanied drawings. Features that are substantially or functionally equal or similar will be referred to with the same reference signs.

Fig.1 shows a block diagram of an exemplary measurement setup comprising a micro structured optical fiber,

Fig. 2 shows a detail of the block diagram of Fig.1, and

Fig.3 shows a diagram with exemplary spectral distributions of a probe signal and response signals returning from the optical fiber.

In the following examples, the invention is described by using time domain reflectometry measurements, also being referred to as optical time domain reflectometry -OTDR-. However, the invention is not limited to OTDR, but includes reflectometry measurements obtained from the frequency domain, also being referred to as optical frequency domain reflectometry -OFDR-.

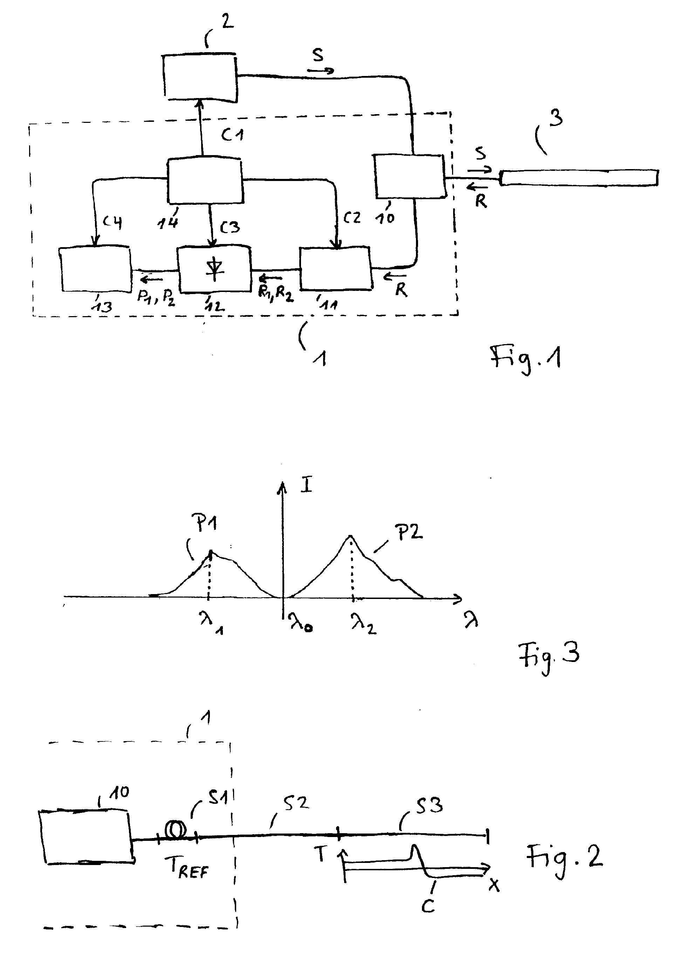

Fig.1 shows an exemplary block diagram of an optical reflectometry system comprising a data acquisition system 1 and a measurement fiber 3, and a light source 2. The measurement fiber 3, in the following also being referred to as ERS fiber 3, shows an enhanced Raman scattering coefficient The acquisition system 1 comprises an optical coupler 10, an optical selector or splitter 11, an optical detector 12, an analyzing unit 13 and a control unit 14. The optical coupler 10 optically connects the optical source 2, the ERS fiber 3 and the optical selector 11 to each other, such that a stimulus or probe signal S emitted from the optical source 2, preferably a narrow band signal at a transmission or probe signal wavelength $\lambda_0$ is provided to the ERS fiber 3 and a response R returning from the ERS fiber 3 is provided to the optical selector 11.

The light source 2 preferably is a laser diode with high output power generating a narrow band probe signal S.

Scattering effects, e.g. Rayleigh scattering, Fresnel reflections, Raman or Brillouin scattering cause a fraction of the forward traveling probe signal in the optical fiber to continuously reflects back, forming a response signal traveling in the opposite direction. Whereas the so-called Fresnel reflection part or the so-called Rayleigh backscattering are returning at the same wavelength $\lambda_0$ with respect to the probe signal, the Raman and Brillouin backscatter signal parts are each composed of so-called Antistokes light and Stokes light returning at wavelengths different to the transmission wavelength $\lambda_0$.

The optical selector 11 selects a first spectral part R1 of the response signal R around a first response wavelength $\lambda_1$, also being referred to as Raman Antistokes or first response signal R1, and a second spectral part R2 around a second response wavelength $\lambda_2$, also being referred to as Raman Stokes or second response signal R2, and passes both response signals R1 and R2 to the optical detector 12. The optical detector performs an opto-electrical conversion to each of the response signals R1 and R2, and generates corresponding first and second power responses P1 and P2 being proportional to the each received optical power or intensity of the response signals.

The system further comprises a control unit 14 for controlling at least one of the light source 2, the optical selector 11, the detector 12 and the analyzer 13 by appropriate control signals C1- C4.

The ERS fiber 3 is realized by providing microstructures within the guiding light path of the ERS fiber, whereby the microstructures have a characteristic length equal or smaller than the wavelength of the probe signal.

The microstructures might be realized by inserting nanoparticles into the guiding light path of the fiber. Alternatively, the microstructures might be realized by providing variations to the inner fiber cladding, e.g. by providing a corresponding doping structure, by providing a composite optical material or polymer material.

In an embodiment, the optical selector 11 passes both the first response signal R1 and the second response signal R2 contemporaneously to the detector 12. This detector 12 thereto might comprise two separate detector elements (diodes) each detecting one of the first power response P1 and the second power response P2 in parallel.

Alternatively, the first response signal R1 and the second response signal R2 are sequentially passed to one detector element of the optical detector 12. Thereto, the control unit 14 might in a first step control the light source 2 to provide a first probe signal to the ERS fiber 3 and the selector 11 to select the first response signal R1 of the returning response signal R. In a second step, the light source 2 is controlled to provide a second probe signal and the selector 11 to select the second response signal R2 of the returning response signal R.

The selector 11 might perform the selection of either the first or second response signal R1 or R2 by means of a movable shutter being moved to alternatively block one of the separated response signals R1 or R2 form the detector 12.

Alternatively, the selector 11 comprises a switchable filter arranged for receiving the response light R and selecting the first response signal R1 at a first switching position and the second response signal at a second switching position. In order to alternately pass the first and second response signal to the optical detector, the switchable filter arrangement might comprise a first optical filter for selecting and separating the first response signal R1 and a second optical filter for selecting and separating the second response signal. Both filters might be mounted on movable supporting device being moved by a drive. The movable supporting device might be realized as a transparent optical plate, and the first and second optical filters might be realized as first and second dielectric coatings extending each over parts of the optical plate.

Power responses P1 and P2 generated by the optical detector 12 are each functions representing a corresponding optical power measured over the time. In order to derive a power function over a position or location along the length of the optical fiber therefrom, the analyzer performs a time-to-location conversion of the power responses over time, using the propagation speed of the light within the ERS fiber 3.

However, as the refractive index of the optical fiber material varies with the wavelength of the traveling optical signal, the group delay within the optical fiber shows a wavelength dependency. This results in differences of the speed of light of the two response signal R1 and R2. Therefore, in a further embodiment, the different group velocities are taken into account by providing a first time-to-location conversion of the first power response P1 by means of a first group velocity at the first wavelength $\lambda_1$, and a second time-to-location conversion of the second power response P2 by means of a second group velocity at the second wavelength $\lambda_2$. The group velocities might be determined on the base of the known dispersion coefficients dependent on the material, the geometry of the ERS fiber 3 and the Raman backscattering wavelengths $\lambda_1$ and $\lambda_2$. Alternatively, the group velocities might be measured.

Fig. 3 shows an exemplary sketch diagram depicting the intensity I of the first response signal R1 (Antistokes light) and the second response signal R2 (Stokes light) over the wavelength $\lambda$. Further, a transmission wavelength $\lambda_0$, a first center wavelength $\lambda_1$, and a second center wavelength $\lambda_2$ are depicted at the wavelength axis.

The acquisition system 1 may be tunable in its optical parameters e.g. emission frequency, detection bands, so that it can be optimally adapted the characteristics of the sensing fiber 3. In an exemplary realization, the transmission wavelength $\lambda_0$ of the probe signal S is about 1064 nm (nanometer), the first center wavelength at $\lambda_1$ of the Antistokes light is about 1014 nm and the second center wavelength $\lambda_2$ of the Stokes light is about 1114 nm. Thus for selecting the first and second response signals R1 and R2, corresponding band pass filters might each have a range of about 100 nm around first and second center wavelengths $\lambda_1$ and $\lambda_2$ respectively. Correspondingly, the microstructures might have a characteristic length of about 1000 nm

The probe signal S1 might comprise a single light pulse for each power measurement.

In order to further enhance the signal strength of the response signals and therewith to enhance the signal to noise ration SNR, a code correlation technique might be used. Thereto, the probe signal S1 comprises multiple pulses representing a certain digital pattern. Digital patterns might be any sequences showing good autocorrelation characteristics, e.g. pseudo random codes or so-called complementary codes.

Using such correlation technique, the light source 2 is modulated according to a specific predetermined digital pattern. The response signals R1 and R2 are composed of an overlay of a plurality of corresponding shifted impulse responses from the optical fiber. To determine the resulting impulse responses and therewith the resulting power responses P1 and P2, the analyzing circuit 13 perform a correlation between the probe signal and each the detected first and second response signals. As result of these correlations, the resulting power responses P1 and P2 versus time are determined. Alternatively this correlation might be performed in the digital time domain by sampling both the detector outputs and digitally convoluting the sampled sequences with the predetermined digital pattern.

Although pseudo random codes are often suggested for correlation procedures, remaining side lobes in the autocorrelation result limit their usefulness in test instruments. Complementary codes require at least two different measurements with each a different code, whereby the resulting correlations are combined. Differently to pseudo random codes, complementary codes, in particular so-called Golay codes show at least under ideal conditions no side lobes in the sum of their respective correlation products.

In an embodiment, the ERS fiber 3 is provided with an open optical far end. Alternatively, to an open far end it is possible to provide a mirror at the far end. In this case, the response signals R1 and R2 will show two sharp peaks followed by second order scattering signals. The time distance between these peaks or between each peak and the time instance of starting the probe signal might used for determining the group velocities in order to determining appropriate time-to-location conversion factors as described above.

In an embodiment, the distributed physical property is a temperature distribution along the optical fiber,

Alternatively to the distributed temperature, the distributed physical property can be strain, pressure or humidity in the ambience of measurement fiber 3.

In the following a principle of an exemplary calculating a temperature distribution along the sensing fiber 3 will be described:

In a first step, the analyzer 13 performs a time-to-location conversion of the power responses P1 and P2 received from the detector 12 over the time, using the speed of light within the ERS fiber at the response wavelengths $\lambda_1$ and $\lambda_2$ each as conversion factor.

In a further step, the converted power responses P1' and P2' are normalized according to the fiber attenuation at each the response wavelength $\lambda_1$ and $\lambda_2$ respectively, i.e. the first normalized power response P1", in the following also being referred to as $P_{antistokes}$, corresponds to first converted power response P1' multiplied with a first linear function over the length l of the ERS fiber, wherein the slope corresponds to the attenuation at the first response wavelength $\lambda_1$, and the second normalized power response R2", in the following also being referred to as $P_{stokes}$, corresponds to second converted power response P2' multiplied with a second linear function over the length l, wherein the slope corresponds to the attenuation at the second response wavelength $\lambda_2$. The attenuations can be derived from a fiber data sheet depicting the fiber attenuation over wavelength or form a measurement.

The ratio of the normalized power responses can be written as follows:

$$P_{stokes}/P_{antistokes} = e^{-h \cdot \Delta v/k \cdot T}, \text{ with}$$

h being the Planck constant, $\Delta v = c(1/\lambda_0 - 1/(\lambda_0 - \Delta\lambda))$ with c being the light speed, k being the Boltzmann constant, and T being the temperature.

After taking the natural logarithm of both sides, the following result is obtained:

$$\log (P_{stokes}/P_{antistokes}) = \log (P_{stokes}) - \log (P_{antistokes}) = -h \cdot \Delta v/k \cdot T$$

Therewith, the log difference d(l) between first normalized power response $P_{antistokes}$ and second normalized power response $P_{stokes}$ is proportional to the inverse of the temperature at the location l (~1/T(l)). The temperature T(l) can thus be derived from the measured first and second power responses and known parameters.

If the temperature is known at one reference point of the ERS fiber, the temperature calculation can be further simplified by calculating the temperature difference to the reference temperature without any need to take into account the parameters h, $\Delta v$ and k.

Fig. 2 shows a part of the acquisition system 1 of Fig.1, being connected to exemplary fiber sections S1, S2, S3 of the optical fiber 3. The first fiber section is a fiber coil being part of the acquisition system 1, e.g. accommodated within a common housing. This section is realized as ERS fiber. The second section S2 is a feeder fiber of non ERS fiber, e.g. realized as standard fiber. The third section S3 is again realized as ERS fiber. The third section S3 is positioned along a line, of which the temperature T is to be measured of the length x of this section. The first section is exposed to a known reference temperature $T_{ref}$ that might be measured by a reference temperature sensor. The analyzer 13 determines a temperature curve C over the length of the third section S3 on the base of the reference temperature $T_{ref}$ and the power responses described above.

## Claims

1. An optical reflectometry system for determining a distributed physical property along a line, comprising:

   - an optical fiber (3) adapted to be positioned along the line, and
   - an acquisition system (1) adapted to be coupled to the optical fiber (3) for analyzing backscattering light being returning from the optical fiber (3) in response to a probe signal (S) launched into the optical fiber (3),

whereby at least a section of the optical fiber (3) comprises microstructures with a characteristic lengths equal or smaller than the wavelength of the probe signal (S), in order to provide a high backscattering coefficient of selected wavelengths different from the wavelength of the probe signal.

2. The optical reflectometry system of claim 1, wherein the acquisition system comprises:

- an optical filter arrangement (11) adapted to be optically connected to the optical fiber (3) for wavelength dependent selecting a first response signal (R1) and a second response signal (R2) returning from the optical fiber (3) in response to a probe signal (S) launched into the optical fiber (3),
- an optical detector (12) for determining a first power function (P1) of the first response signal (R1) and a second power function (P2) of the second response signal (R2), and
- an analyzing circuit (13) adapted for deriving the distributed physical property by evaluating the first power function (P1) and the second power function (P2).

3. The optical reflectometry system of claim 1 or 2, wherein the optical fiber (3) comprises a plurality of particles embodied within the optical fiber, having equal or smaller diameters compared to the wavelength of the probe signal (S) in at least two dimensions.

4. The optical reflectometry system of claim 3, wherein the particles are of metal, preferably of gold or silver.

5. The optical reflectometry system of claim 1 or 2, wherein the microstructures of the optical fiber (3) are realized by doping the fiber material with dopant material, wherein the dope material are chosen preferably from the rare earth elements.

6. The optical reflectometry system of claim 1 or 2, wherein the optical fiber (3) comprises one of: Polymer or composite material.

7. The optical reflectometry system of claim 1 or any one of the above claims, wherein the analyzing unit (13) is adapted to determine the distributed physical property over the position of the optical fiber (3) by relating the first power function (P1) to a propagation speed of the first response signal (R1), relating the second power function (P2) to a propagation speed of the second response signal (R2) within the optical fiber (3), and setting corresponding related power functions in relation to each other.

8. The optical reflectometry system of claim 1 or any one of the above claims, wherein the distributed physical property is a temperature profile along at least a part of the optical fiber (3).

9. The optical reflectometry system of claim 1 or any one of the above claims, comprising a control circuit (14) being adapted to control a light source (10) to generate the probe light (S1) having a sequence of optical pulses, wherein said sequence corresponds to a defined digital pattern,

10. The optical reflectometry system of claim 9, wherein the analyzing circuit is adapted to determine a first correlation function on the base of correlating said digital pattern with the first power function (P1), and a second correlation function on the base of correlating said sequence with the second power function (P2), and to determine the physical property on the base of a ratio of the first correlation function and the second correlation function.

Fig. 1

Fig. 3

Fig. 2

**European Patent Office**

# EUROPEAN SEARCH REPORT

Application Number

EP 07 10 1513

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 7 116 469 B2 (BRAGHERI ATTILIO [IT] ET AL BRAGHERI ATTILIO [IT] ET AL) 3 October 2006 (2006-10-03) * column 2, line 29 - column 5, line 17 * * column 5, line 63 - column 10, line 59 * * figures 1,2 * | 1-10 | INV. G01N21/77 G01N21/81 G01L11/02 G01K11/32 |
| X | GU, CLAIRE ET AL: "Ultra-sensitive compact fiber sensor based on nanoparticle surface enhanced Raman scattering" PHOTOREFRACTIVE FIBER AND CRYSTAL DEVICES: MATERIALS, OPTICAL PROPERTIES, AND APPLICATIONS XI, PROC. SPIE, [Online] vol. 5911, September 2005 (2005-09), pages 591108-1-591108-11, XP002436279 Retrieved from the Internet: URL:http://spiedl.aip.org/getpdf/servlet/G etPDFServlet?filetype=pdf&id=PSISDG0059110 00001591108000001&idtype=cvips&prog=normal > [retrieved on 2007-06-05] * the whole document * | 1-10 | |
| A | EP 0 213 872 A2 (YORK LTD [GB]) 11 March 1987 (1987-03-11) * column 7, line 8 - line 49; figure 3 * | 1-10 | TECHNICAL FIELDS SEARCHED (IPC) G01N G01L G01K |
| A | US 5 765 948 A (SAI YUKIO [JP]) 16 June 1998 (1998-06-16) * column 6, line 1 - column 11, line 30; figures 1-12 * | 1-10 | |
| A | US 6 900 890 B1 (RICE ROBERT R [US]) 31 May 2005 (2005-05-31) * column 3, line 5 - column 5, last line * | 1-10 | |

-/--

The present search report has been drawn up for all claims

| Place of search | Date of completion of the search | Examiner |
|---|---|---|
| Munich | 5 June 2007 | Consalvo, Daniela |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**European Patent Office**

**EUROPEAN SEARCH REPORT**

Application Number

EP 07 10 1513

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | EGGLETON, B.J. ET AL: "Novel waveguide structures for enhanced fiber grating devices"<br>IEEE JOURNAL ON SELECTED TOPICS IN QUANTUM ELECTRONICS, [Online]<br>vol. 7, no. 3, May 2001 (2001-05), pages 409-424, XP002436280<br>Retrieved from the Internet:<br>URL:http://ieeexplore.ieee.org/iel5/2944/2 0773/00962265.pdf?arnumber=962265><br>[retrieved on 2007-06-05]<br>*abstract; Figs. 1, 17-20;<br>paragraphs IV.,V.*<br>----- | 1-10 | |

TECHNICAL FIELDS
SEARCHED      (IPC)

The present search report has been drawn up for all claims

| Place of search | Date of completion of the search | Examiner |
|---|---|---|
| Munich | 5 June 2007 | Consalvo, Daniela |

EPO FORM 1503 03.82 (P04C01)

**ANNEX TO THE EUROPEAN SEARCH REPORT
ON EUROPEAN PATENT APPLICATION NO.**

EP 07 10 1513

This annex lists the patent family members relating to the patent documents cited in the above-mentioned European search report.
The members are as contained in the European Patent Office EDP file on
The European Patent Office is in no way liable for these particulars which are merely given for the purpose of information.

05-06-2007

| Patent document cited in search report | | Publication date | Patent family member(s) | | Publication date |
|---|---|---|---|---|---|
| US 7116469 | B2 | 03-10-2006 | AU | 2002237255 A1 | 09-07-2003 |
| | | | CA | 2470136 A1 | 03-07-2003 |
| | | | CN | 1582519 A | 16-02-2005 |
| | | | WO | 03055017 A1 | 03-07-2003 |
| | | | EP | 1456918 A1 | 15-09-2004 |
| | | | JP | 2005513562 T | 12-05-2005 |
| | | | US | 2005225841 A1 | 13-10-2005 |
| EP 0213872 | A2 | 11-03-1987 | AU | 6157686 A | 26-02-1987 |
| | | | DE | 3687438 D1 | 18-02-1993 |
| | | | DE | 3687438 T2 | 06-05-1993 |
| | | | DK | 393686 A | 21-02-1987 |
| | | | ES | 2001244 A6 | 01-05-1988 |
| | | | IN | 169142 A1 | 07-09-1991 |
| | | | JP | 2010425 C | 02-02-1996 |
| | | | JP | 7046056 B | 17-05-1995 |
| | | | JP | 62110160 A | 21-05-1987 |
| | | | US | 4823166 A | 18-04-1989 |
| US 5765948 | A | 16-06-1998 | JP | 8247858 A | 27-09-1996 |
| US 6900890 | B1 | 31-05-2005 | US | 2005105083 A1 | 19-05-2005 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5618108 A

**Non-patent literature cited in the description**

- **DANIEL J. WHITE ; PAUL R. STODDART.** Nanostructured optical fiber with surface-enhanced Raman scattering functionality. *OPTICS LETTERS,* 15 March 2005, vol. 30 (6
- **ALAIN CAMPION ; PATANJALI KAMBHAMPATI.** Surface-enhanced Raman scattering. *Chemical Society Reviews,* 1998, vol. 27
- **LI-LIN TAY.** *Applications of Enhanced Raman Spectroscopy in Biological Sciences, http://www.canadiansemiconductor.org/presentations/lilin tay.pdf*
- **GEORGE STEGEMAN.** *Advanced Raman Gain for Next Generation Networks, http://oclab.usc.edu/nsf/oct2002/pdf/stegeman-raman-gain.pdf*